# EUROPÄISCHE PATENTSCHRIFT

(11) **EP 3 630 481 B1**
(45) Veröffentlichungstag und Bekanntmachung des Hinweises auf die Patenterteilung: **12.01.2022**
(21) Anmeldenummer: 18725872.8
(22) Anmeldetag: 29.05.2018
(51) Int. Cl.: B32B 1/08, B32B 5/18, B32B 5/20, B32B 7/12, B32B 15/04, B32B 15/08, B32B 15/095, B32B 15/18, B32B 15/20, B32B 27/18, B32B 27/40, B32B 1/06, F16L 11/14, F16L 59/14, F16L 59/153, B32B 5/32

(54) **VERFAHRUNG ZUR HERSTELLUNG VON GEDÄMMTEN ROHREN**
METHOD FOR THE PREPARATION OF INSULATED TUBES
PROCÉDÉ DE FABRICATION DE TUYAUX ISOLÉS

(30) Priorität: 30.05.2017 EP 17173464
(43) Veröffentlichungstag der Anmeldung: 08.04.2020
(73) Patentinhaber: BASF SE, 67056 Ludwigshafen am Rhein (DE)
(72) Erfinder: GRIESER-SCHMITZ, Christof, 49448 Lemfoerde (DE); ELLERSIEK, Carsten, 49448 Lemfoerde (DE); POPOV, Alex, 49448 Lemfoerde (DE)
(74) Vertreter: BASF IP Association
(86) Internationale Anmeldenummer: PCT/EP2018/064016
(87) Internationale Veröffentlichungsnummer: WO 2018/219916

(56) Entgegenhaltungen:
- EP-A2- 0 960 723
- EP-B1- 1 141 613
- WO-A1-2014/012877
- DATABASE WPI Week 200681 Thomson Scientific, London, GB; AN 2006-793212 XP002775879, -& JP 2006 298970 A (CHUGOKU TORYO KK) 2. November 2006 (2006-11-02)

## Beschreibung

Die vorliegende Erfindung betrifft ein Verfahren zur Herstellung von gedämmten Rohren, umfassend das Bereitstellen eines Mediumrohrs und eines aus einer Folie kontinuierlich gebildeten Folienschlauches oder eines Mediumrohrs und eines Mantelrohrs, wobei das Mediumrohr innerhalb des Folienschlauchs oder des Mantelrohres angeordnet ist und zwischen Mediumrohr und Folienschlauch oder Mantelrohr ein Spalt ausgebildet wird, wobei auf der dem Folienschlauch oder Mantelrohr zugewandten Oberfläche des Mediumrohrs ein Haftvermittler aufgetragen ist, das Einfüllen eines Polyurethansystems mindestens umfassend eine Isocyanatkomponente (a) enthaltend mindestens ein Isocyanat, eine Polyolkomponente (b) und mindestens einen Katalysator in den Spalt bevor der Haftvermittler vollständig gehärtet ist und das Aufschäumen und Aushärtenlassen des Polyurethansystems. Weiterhin betrifft die vorliegende Erfindung gedämmte Rohre, erhältlich oder erhalten nach einem erfindungsgemäßen Verfahren.

Es ist grundsätzlich aus dem Stand der Technik bekannt, dass Polyurethanschaumstoffe als Dämmmaterial eingesetzt werden können, wobei auch schichtweise aufgebaute Verbundkörper an sich bekannt sind.

EP 2 435 243 A1 offenbart ein Verfahren zur Herstellung eines Schaumstoff-Verbundelements, umfassend die Schritte des Bereitstellens einer Deckschicht, des Auftragens einer Haftvermittlerschicht auf die Deckschicht, wobei die Haftvermittlerschicht ein modifiziertes Isocyanat umfasst, und des Auftragens einer Polyurethan und/oder Polyisocyanurat umfassenden Schaumstoffschicht auf die Haftvermittlerschicht. Das modifizierte Isocyanat in der Haftvermittlerschicht weist beim Auftragen einen Gehalt an freien Isocyanatgruppen von ≥ 10% bis ≤ 25% auf. Die Erfindung betrifft weiterhin die Verwendung eines modifizierten Isocyanats mit einem Gehalt an freien Isocyanatgruppen von ≥ 10% bis ≤ 25% als Haftvermittler in der Herstellung von Schaumstoff-Verbundelementen sowie durch das erfindungsgemäße Verfahren erhaltene Schaumstoff-Verbundelemente.

EP 1 516 720 A1 offenbart ein Verfahren zur Herstellung eines Verbundelements aufgebaut aus einer ersten Deckschicht, einer reaktiven Haftvermittlerschicht, enthaltend Polyurethan mit einer Dichte von 400 bis 1200 g/l, einer Schaumstoffschicht, enthaltend Polyisocyanurat mit einer Dichte von 30 bis 100 g/l, gegebenenfalls einer zweiten reaktiven Haftvermittlerschicht, enthaltend Polyurethan mit einer Dichte von 400 bis 1200 g/l, und einer zweiten Deckschicht sowie derartig Verbundelemente selbst.

WO 2015/091451 A1 offenbart ein Verfahren zur Herstellung eines Verbundelements, mindestens umfassend die Schritte Bereitstellen einer Deckschicht; Auftragen einer Zusammensetzung Z1 enthaltend mindestens eine gegenüber Isocyanaten reaktive Verbindung auf die Deckschicht; und das Auftragen einer Zusammensetzung Z2, die zur Herstellung eines Polyurethan- und/oder Polyisocyanuratschaums geeignet ist, auf die zuvor aufgetragene Schicht, sowie Verbundelemente, erhältlich oder erhalten nach einem derartigen Verfahren.

WO 2011/045139 A1 offenbart Isolierplatten, umfassend eine Polyisocyanuratschaumschicht mit einer Schichtoberflache, die mittels eines Polyisocyanuratklebstoffs an eine Stirnoberflache geklebt ist, wobei der Polyisocyanuratklebstoff vor dem Abschluss der Polymerisation von sowohl der Schichtoberflache als auch dem Polyisocyanuratklebstoff zwischen die Schichtoberflache und die Stirnoberflache gelegt wurde, wobei der Polyisocyanuratklebstoff eine durchschnittliche Dicke von 10 bis 500 µm aufweist, sowie ein Verfahren zur Herstellung derartiger Platten. Auch mit Polyurethanschaumstoffen gedämmte Rohre sind im Stand der Technik bekannt und beispielsweise in EP 1 141 613 B1, EP A 865 893, EP 1 777 051 B1, EP 1 595 904 A2, WO 00/39497, WO 01/18087 A1, EP 2 143 539 A1, WO 2014/012877 A1 und EP 1 428 848 B1 beschrieben. Gedämmte

Rohrleitungssysteme werden aus einzelnen Rohrsegmenten zusammengefügt. Standardmäßig werden hierfür Rohrlängen von 6 m, 12 m und 16 m verwendet. Benötigte Überhanglängen werden speziell gefertigt oder aus bestehender Konfektionsware zugeschnitten. Die einzelnen Rohrsegmente werden verschweißt und mit bestehender Muffentechnik im Bereich der Schweißnaht nachgedämmt. Diese Muffenverbindungen bergen ein größeres Schadenspotential als die Rohrware selbst. Dieser Unterschied resultiert aus der Tatsache, dass die Rohrlängen unter festgelegten, kontrollierbaren Bedingungen in Produktionshallen hergestellt werden. Die Muffenverbindungen werden oft unter Zeitdruck bei Wind und Wetter vor Ort auf der Baustelle hergestellt. Einflüsse wie Temperatur, Verschmutzungen und Feuchtigkeit beeinflussen oft die Qualität der Muffenverbindungen. Weiterhin stellt die Zahl der Muffenverbindungen einen großen Kostenfaktor bei der Installation von Rohrleitungssystemen dar.

Der größte Teil der Einzelrohre wird mit Hilfe der diskontinuierlichen Rohr-in-Rohr Produktion hergestellt. Im Rahmen dieses Verfahrens wird das Mediumrohr, im Allgemeinen aus Stahl, mit sternförmigen Abstandshaltern versehen, die der Zentrierung des inneren Rohres dienen. Das Mediumrohr wird in das äußere Mantelrohr, im Allgemeinen aus Polyethylen, geschoben, so dass sich ein Ringspalt zwischen beiden Rohren ergibt. Dieser Ringspalt wird aufgrund seiner hervorragenden Dämmeigenschaften mit Polyurethanschaum gefüllt. Hierfür wird das leicht geneigte Doppelrohr mit Abschlusskappen versehen, die mit Entlüftungslöchern ausgestattet sind. Anschließend wird in den Ringspalt mittels einer Polyurethandosiermaschine das flüssige Reaktionsgemisch eingefüllt, welches in noch flüssiger Form im Rohrspalt hinunter fließt bis die Reaktion einsetzt. Ab diesem Zeitpunkt findet die weitere Verteilung durch Fließen des langsam in der Viskosität ansteigenden Schaums statt, bis das Material ausreagiert ist.

In der rohrverarbeitenden Industrie ist es daher erstrebenswert, möglichst wenige Muffenverbindungen, bezogen auf die Länge einer Leitung, zu installieren. Daher werden vielfach kontinuierliche Verfahren zur Herstellung gedämmter Rohre eingesetzt.

Gedämmte Rohre werden zum Transport verschiedener Medien eingesetzt, insbesondere von Öl und heißem Wasser zur Versorgung mit Fernwärme. Ein entscheidendes Kriterium für die Auslegung von Fernwärmenetzen sind die Verbundeigenschaften der gedämmten Rohre zwischen dem Mediumrohr und dem Dämmmaterial. Nach der maßgeblichen Norm für starre Rohre DIN EN 253:2015-12 muss die axiale Scherfestigkeit bei 23°C bei mindestens 0,12 MPa liegen. Für flexible Rohre nach DIN EN 15632-2:2010-6 bei mindestens 0,09 MPa für Kunststoffrohre und nach DIN EN 15632-4:2009-1 mindestens bei 0,12 MPA für Metallrohre liegen. Gerade bei der kontinuierlichen Herstellung von vorgedämmten Rohren ist es bedingt durch das Herstellungsverfahren schwierig diese Werte sicher zu erreichen. Dies führt immer wieder zu Fehlproduktionen mit ungenügender Haftung, was wiederum zu Produktionsausfall, Entsorgungskosten und zusätzlichem Materialverbrauch führt.

Aufgabe der vorliegenden Erfindung war es, ein Verfahren zur Herstellung von gedämmten Rohren bereitzustellen, wobei Rohre erhalten werden, welche sich durch eine gleichmäßig verteilte Gesamtrohdichte über die Rohrlänge und eine homogene Schaumstruktur über den Rohrquerschnitt, sowie kleine Zelldurchmesser des enthaltenen Polyurethan-Schaumstoffs und damit durch eine geringe Wärmeleitfähigkeit auszeichnen. Des Weiteren ist es eine Aufgabe der vorliegenden Erfindung, ein Verfahren zur Herstellung von gedämmten Rohren bereitzustellen, wobei Rohre erhalten werden, die eine hohe Stabilität, insbesondere eine hohe axiale Scherfestigkeit, aufweisen. Es soll auch möglich sein, gedämmte Rohre mit großen Durchmessern und/oder hohen Rohdichten des dämmenden Materials kontinuierlich herzustellen.

Diese Aufgaben werden erfindungsgemäß gelöst durch ein Verfahren zur Herstellung von gedämmten Rohren, umfassend die Schritte:
(A) Bereitstellen eines Mediumrohrs und eines aus einer Folie kontinuierlich gebildeten Folienschlauches oder eines Mediumrohrs und eines Mantelrohrs, wobei das Mediumrohr innerhalb des Folienschlauchs oder des Mantelrohres angeordnet ist und zwischen Mediumrohr und Folienschlauch oder Mantelrohr ein Spalt ausgebildet wird,
   wobei auf der dem Folienschlauch oder Mantelrohr zugewandten Oberfläche des Mediumrohrs ein Haftvermittler aufgetragen ist,
(B) Einfüllen eines Polyurethansystems mindestens umfassend eine Isocyanatkomponente (a) enthaltend mindestens ein Isocyanat, eine Polyolkomponente (b) und mindestens einen Katalysator in den Spalt bevor der Haftvermittler vollständig gehärtet ist und
(C) Aufschäumen und Aushärtenlassen des Polyurethansystems, wobei der Haftvermittler ausgewählt ist aus der Gruppe bestehend aus Haftvermittlern auf Basis von Polyurethanen und wobei der Haftvermittler eine Rohdichte, bestimmt ohne feste Füllstoffe, im Bereich von 400 bis 1200 kg/m3 aufweist.

Überraschender weise hat sich gezeigt, dass die Aufbringung eines zusätzlichen Haftvermittlers auf das Mediumrohr kurz vor dem Auftragen des Dämmschaums zu einer deutlichen Erhöhung der axialen Schwerfestigkeit führt. Im Vergleich zu gedämmten Rohren, die in einem vergleichbaren Verfahren ohne das Auftragen eines Haftvermittlers hergestellt wurden, konnte in einzelnen Fällen mehr als eine Verdopplung der axialen Scherfestigkeit erreicht werden. Soweit nicht anders angegeben wird im Rahmen der vorliegenden Erfindung die axiale Scherfestigkeit bestimmt nach DIN EN 253:2015-12.

Erfindungsgemäß umfasst das Verfahren die Schritte (A), (B) und (C). Dabei wird gemäß Schritt (A) ein Mediumrohr eingesetzt, wobei auf der dem Folienschlauch oder Mantelrohr zugewandten Oberfläche des Mediumrohrs ein Haftvermittler aufgetragen ist. Grundsätzlich können im Rahmen der vorliegenden Erfindung eine Vielzahl von Haftvermittlern eingesetzt werden, solange gewährleistet ist, dass das Einfüllen gemäß Schritt (B) erfolgen kann, bevor der Haftvermittler vollständig gehärtet ist.

Geeignete Haftvermittler sind dem Fachmann an sich bekannt. Als Haftvermittler im Rahmen der vorliegenden Erfindung Reaktivklebstoffe können insbesondere ZweiKomponenten-Polyurethanklebstoffe eingesetzt werden. Beispielsweise können kompakt bis leicht schäumend Haftvermittler eingesetzt werden.

Bevorzugt handelt es sich bei dem erfindungsgemäß eingesetzten Haftvermittler um ein 2-Komponentensystem. Gemäß einer weiteren Ausführungsform betrifft die vorliegende Erfindung daher ein Verfahren wie zuvor beschrieben, wobei der Haftvermittler ein 2-Komponentensystem ist.

Vorzugsweise werden im Rahmen der vorliegenden Erfindung Haftvermittler auf Basis von Polyurethanen, die mindestens eine Isocyanatkomponente und eine Polyolkomponente umfassen eingesetzt.

Es hat sich gezeigt, dass besonders vorteilhafte Eigenschaften erreicht werden können, wenn der eingesetzte Haftvermittler aus den gleichen Komponenten zusammengesetzt ist wie das gemäß Schritt (B) eingefüllte Polyurethansystem.

Erfindungsgemäß weist der Haftvermittler eine Rohdichte, bestimmt ohne feste Füllstoffe, im Bereich von 400 bis 1200 kg/m³ auf, bevorzugt im Bereich von 500 bis 1100 kg/m³, besonders bevorzugt im Bereich von 600 bis 1000 kg/m³.

Die einzelnen Schritte des erfindungsgemäßen Verfahrens werden im Folgenden detailliert erläutert:
Schritt (A) des erfindungsgemäßen Verfahrens umfasst das Bereitstellen eines Mediumrohrs und eines aus einer Folie kontinuierlich gebildeten Folienschlauches oder eines Mediumrohrs und eines Mantelrohrs, wobei das Mediumrohr innerhalb des Folienschlauchs oder des Mantelrohres angeordnet ist und zwischen Mediumrohr und Folienschlauch oder Mantelrohr ein Spalt ausgebildet wird, wobei auf der dem Folienschlauch oder Mantelrohr zugewandten Oberfläche des Mediumrohrs ein Haftvermittler aufgetragen ist.

Dabei kann der Haftvermittler auf alle dem Fachmann bekannten Arten auf das Mediumrohr aufgebracht werden, beispielsweise mittels Sprühen oder Aufstreichen. Erfindungsgemäß ist es bevorzugt, wenn der Haftvermittler in einer möglichst dünnen Schicht gleichmäßig aufgetragen wird. Beispielsweise kann die aufgebrachte Haftvermittlerschicht eine mittlere Dicke im Bereich von 6 µm bis 3000 µm, bevorzugt im Bereich von 10 µm bis 2500 µm, besonders bevorzugt im Bereich von 20 µm bis 2000 µm, ganz besonders bevorzugt im Bereich von 30 µm bis 1500 µm haben.

Gemäß einer weiteren Ausführungsform betrifft die vorliegende Erfindung daher ein Verfahren wie zuvor beschrieben, wobei der Haftvermittler mittels Sprühen oder Streichen aufgetragen wird.

Üblicherweise wird der Haftvermittler gleichmäßig auf dem Mediumrohr aufgebracht, so dass beispielsweise mindestens 50 % der Oberfläche des Mediumrohrs, auf die der Haftvermittler aufgebracht wird, bedeckt sind, vorzugsweise mindestens 70%, weiter bevorzugt mindestens 90 %.

Gemäß einer weiteren Ausführungsform betrifft die vorliegende Erfindung daher ein Verfahren wie zuvor beschrieben, wobei der Haftvermittler einen Anteil der dem Folienschlauch oder Mantelrohr zugewandten Oberfläche des Mediumrohrs im Bereich von 50 bis 100% der Oberfläche bedeckt, beispielsweise im Bereich von 80 bis 100% der Oberfläche, weiter bevorzugt im Bereich von 80 bis 100% der Oberfläche, besonders bevorzugt im Bereich von 90 bis 100% der Oberfläche.

Das wenigstens eine Mediumrohr, welches erfindungsgemäß einen geringeren Durchmesser aufweist als der Folienschlauch oder das Mantelrohr und auch als das in Schritt (D) des erfindungsgemäßen Verfahrens gebildete Mantelrohr, ist so innerhalb des Mantelrohres angeordnet, dass sich zwischen Mediumrohr und Folienschlauch bzw. Mantelrohr ein Spalt ausbildet. In diesen Spalt wird in dem erfindungsgemäßen Schritt (B) das Polyurethansystem eingefüllt. Je nachdem, wie viele Mediumrohre erfindungsgemäß vorliegen, weist der gebildete Spalt verschiedene Formen auf.

Bei dem erfindungsgemäß eingesetzten wenigstens einen Mediumrohr handelt es sich im Allgemeinen um ein Stahlrohr mit einem Außendurchmesser von beispielsweise 1 bis 70 cm, bevorzugt 4 bis 70 cm, besonders bevorzugt 10 bis 70 cm, und ganz besonders bevorzugt 20 bis 70 cm. Liegen mehr als ein Mediumrohre vor, so können diese gleiche oder unterschiedliche Außendurchmesser aufweisen. Die Länge des wenigstens einen Mediumrohrs beträgt beispielsweise 3 bis 24 m, bevorzugt 6 bis 16 m. Weiter bevorzugt wird das wenigstens eine Mediumrohr als Rollenware mit einer Länge von beispielsweise 50 bis 1500 m bereitgestellt.

Bei der kontinuierlichen Durchführung des erfindungsgemäßen Verfahrens wird das wenigstens eine Mediumrohr beispielsweise in Form von Rollenware bereitgestellt. Das wenigstens eine Mediumrohr kann auch als Stangenware bereitgestellt werden.

In Schritt (A) des erfindungsgemäßen Verfahrens werden wenigstens ein Mediumrohr und ein aus einer Folie kontinuierlich gebildeter Folienschlauch wenigstens ein Mediumrohr und ein Mantelrohr bereitgestellt.

Sofern ein Folienschlauch verwendet wird, wird bevorzugt eine längliche Folie kontinuierlich von einer Rolle abgewickelt und gegebenenfalls durch dem Fachmann bekannte Verfahren, beispielsweise Schweißen oder Kleben, zu einem Folienschlauch zusammengefügt. Dieses Zusammenführen erfolgt in einer bevorzugten Ausführungsform des erfindungsgemäßen Verfahrens in dem Backenband, in dem auch das wenigstens eine Mediumrohr kontinuierlich zugeführt wird. Die Folie wird dabei bevorzugt über eine Formschulter bzw. Folienschulter zugeführt wird. Es wird bevorzugt ein kreisrunder Folienschlauch gebildet.

Die Folie kann mindestens eine Lage thermoplastischen Kunststoffes, der bevorzugt gegenüber den Zellgasen und Sauerstoff eine diffusionshemmende Wirkung hat, umfassen. Bevorzugt umfasst die Folie zusätzlich mindestens eine Lage aus Metall, z. B. Aluminium. Erfindungsgemäß geeignete Folien sind beispielsweise aus EP 0 960 723 A2 bekannt.

Gemäß einer weiteren Ausführungsform betrifft die vorliegende Erfindung daher ein Verfahren wie zuvor beschrieben, wobei das Material, aus dem das Mantelrohr oder der Folienschlauch gebildet wird, ein thermoplastischer Kunststoff ist.

Die erfindungsgemäß eingesetzte Folie weist bevorzugt eine Breite auf, die es erlaubt, einen entsprechenden Folienschlauch zu bilden, der einen Innendurchmesser von im Allgemeinen 6 bis 90 cm, bevorzugt 12 bis 90 cm, besonders bevorzugt 19 bis 90 cm, ganz besonders bevorzugt 35 bis 90 cm, aufweist. Diese Folie wird bevorzugt als Rollenware bereitgestellt.

Die erfindungsgemäß eingesetzte Folie kann aus jedem dem Fachmann als geeignet erscheinenden Material gebildet sein, beispielsweise Polyethylen.

Die erfindungsgemäß eingesetzte Folie weist im Allgemeinen jede dem Fachmann als geeignet erscheinende Dicke auf, beispielsweise 5 bis 150 µm.

Das wenigstens eine Mediumrohr wird in Schritt (A) des erfindungsgemäßen Verfahrens innerhalb des Folienschlauches so angeordnet, dass zwischen dem wenigstens einen Mediumrohr und Folienschlauch bzw. zwischen dem wenigstens einen Mediumrohr und Mantelrohr ein Spalt ausgebildet wird. Dabei ist es besonders bevorzugt, dass das eine Mediumrohr mittig in dem, bevorzugt kreisrunden, Folienschlauch bzw. Mediumrohr angeordnet ist, so dass ein konzentrischer Spalt gebildet wird. Bei mehr als einem Mediumrohr sind diese bevorzugt symmetrisch im Folienschlauch angeordnet.

Das Mantelrohr weist im Allgemeinen eine Dicke von 1 bis 30 mm auf. Der Innendurchmesser des Mantelrohrs beträgt im Allgemeinen 6 bis 140 cm, bevorzugt 10 bis 120 cm. Die Länge des Mantelrohres beträgt beispielsweise 1 bis 24 m, bevorzugt 6 bis 16 m.

Das Mantelrohr kann gegebenenfalls aus mehreren Schichten bestehen, die beim Extrusionsvorgang zur Herstellung des Mantelrohres zusammengeführt werden können. Ein Beispiel hierfür ist das Einbringen von mehrlagigen Folien zwischen Polyurethan-Schaumstoff und Mantelrohr, wobei die Folie zur Verbesserung der Sperrwirkung mindestens eine metallische Lage enthält. Geeignete Mantelrohre dieses Typs sind in EP 0 960 723 A2 beschrieben.

In einer besonders bevorzugten Ausführungsform handelt es sich bei dem erfindungsgemäß hergestellten gedämmten Rohr um ein gedämmtes Verbundmantelrohr für erdverlegte Fernwärmenetze, welches die Anforderungen von DIN EN 253:2015-12 erfüllt.

Erfindungsgemäß kann das Einfüllen des Polyurethansystems an einem Ende des Rohres oder in der Mitte oder an jeder Stelle zwischen einem Ende und der Mitte, jeweils in den dort befindlichen Spalt zwischen Mediumrohr und Mantelrohr bzw. Folienschlauch, erfolgen.

Schritt (B) des erfindungsgemäßen Verfahrens umfasst das Einfüllen eines Polyurethansystems mindestens umfassend eine Isocyanatkomponente (a) enthaltend mindestens ein Isocyanat, eine Polyolkomponente (b) und mindestens einen Katalysator in den Spalt bevor der Haftvermittler vollständig gehärtet ist.

Das Einfüllen des Polyurethansystems gemäß Schritt (B) in den Ringspalt zwischen Mediumrohr und Mantelrohr erfolgt beispielsweise mittels einer dem Fachmann bekannten Polyurethandosiermaschine.

Zum Einfüllen gemäß Schritt (B) des erfindungsgemäßen Verfahrens kann im Allgemeinen jede dem Fachmann bekannte Vorrichtung, beispielsweise am Markt frei erhältliche Hochdruckdosiermaschinen, beispielsweise der Firmen Hennecke GmbH, Cannon Deutschland GmbH oder Krauss Maffei Kunststofftechnik GmbH, eingesetzt werden.

Das flüssige Reaktionsgemisch, d. h. das erfindungsgemäße Polyurethansystem fließt während und nach dem Einfüllen in noch flüssiger Form im Spalt hinunter, bis die Polymerisationsreaktion mit Schaumbildung einsetzt. Ab diesem Zeitpunkt findet die weitere Verteilung durch Fließen des langsam in der Viskosität ansteigenden Schaums statt, bis das Material ausreagiert ist.

Vorzugsweise erfolgt das Einfüllen des Polyurethansystems, wenn der eingesetzte Haftvermittler noch ausreichend nass ist. Im Rahmen der vorliegenden Erfindung erfolgt das Einfüllen des Polyurethansystems vorzugsweise innerhalb einer Zeit nach dem Auftragen des Haftvermittlers, die unterhalb der Abbindezeit des Haftvermittlers liegt, wenigstens aber bevor der Haftvermittler vollständig ausreagiert, also nicht mehr klebrig ist.

Erfindungsgemäß einsetzbare bzw. bevorzugt eingesetzte Polyurethansysteme werden im Folgenden detailliert erläutert. Als Isocyanatkomponente (a) kommen die üblichen aliphatischen, cycloaliphatischen und insbesondere aromatischen Di- und/oder Polyisocyanate zum Einsatz. Bevorzugt verwendet werden Diphenylmethandiisocyanat (MDI) und insbesondere Gemische aus Diphenylmethandiisocyanat und Polyphenylenpolymethylenpolyisocyanaten (Roh-MDI). Die Isocyanate können auch modifiziert sein, beispielsweise durch Einbau von Uretdion-, Carbamat-, Isocyanurat-, Carbodiimid-, Allophanat- und insbesondere Urethangruppen.

Die Isocyanatkomponente (a) kann auch in Form von Polyisocyanatprepolymeren eingesetzt werden. Diese Prepolymere sind aus dem Stand der Technik bekannt. Die Herstellung erfolgt auf an sich bekannte Weise, indem vorstehend beschriebene Polyisocyanate (a), beispielsweise bei Temperaturen von etwa 80 °C, mit Verbindungen mit gegenüber Isocyanaten reaktiven Wasserstoffatomen, bevorzugt mit Polyolen, zu Polyisocyanatprepolymeren umgesetzt werden. Das Polyol-Polyisocyanat-Verhältnis wird im Allgemeinen so gewählt, dass der NCO-Gehalt des Prepolymeren 8 bis 25 Gew.-%, vorzugsweise 10 bis 22 Gew.-%, besonders bevorzugt 13 bis 20 Gew.-% beträgt.

Erfindungsgemäß besonders bevorzugt wird als Isocyanatkomponente Roh-MDI eingesetzt.

In einer bevorzugten Ausführungsform wird die Isocyanatkomponente (a) so gewählt, dass sie eine Viskosität weniger als 800 mPas, bevorzugt von 100 bis 650, besonders bevorzugt von 120 bis 400, insbesondere von 180 bis 350 mPas, gemessen nach DIN 53019 bei 20 °C, aufweist.

Im erfindungsgemäß eingesetzten Polyurethansystem ist das mindestens eine Polyol bevorzugt eine Polyolmischung (b), die im Allgemeinen Polyole als Bestandteil (b1), und gegebenenfalls chemische Treibmittel als Bestandteil (b2) enthält. Im Allgemeinen enthält die Polyolmischung (b) physikalische Treibmittel (b3).

Die Viskosität der erfindungsgemäß eingesetzten Polyolmischung (b) (jedoch ohne physikalische Treibmittel (b3)) beträgt im Allgemeinen 200 bis 10000 mPas, bevorzugt 500 bis 9500 mPas, besonders bevorzugt 1000 bis 9000 mPas, ganz besonders bevorzugt 2500 bis 8500 mPas, insbesondere 3100 bis 8000 mPas, jeweils gemessen nach DIN 53019 bei 20 °C. In einer besonders bevorzugten Ausführungsform wird in dem erfindungsgemäßen Verfahren eine Polyolmischung (b) (jedoch ohne physikalische Treibmittel (b3)) eingesetzt, die eine Viskosität von mehr als 3000 mPas, beispielsweise 3100 bis 8000 mPas, jeweils gemessen nach DIN 53019 bei 20 °C, aufweist.

Die vorliegende Erfindung betrifft daher bevorzugt das erfindungsgemäße Verfahren, wobei als mindestens ein Polyol (b) eine Polyolmischung (b) (jedoch ohne physikalische Treibmittel (b3)) eingesetzt wird, die eine Viskosität von mehr als 3000 mPas, beispielsweise 3100 bis 8000 mPas, jeweils gemessen nach DIN 53019 bei 20 °C, aufweist. Die Polyolmischung (b) enthält im Allgemeinen physikalische Treibmittel (b3). Die Zugabe von physikalischem Treibmittel führt jedoch zu einer signifikanten Absenkung der Viskosität. Daher ist es ein wesentlicher Punkt der Erfindung, dass die oben gemachten Angaben zur Viskosität der Polyolmischung (b), auch für den Fall, dass sie physikalische Treibmittel enthält, sich auf die Viskosität der Polyolmischung (b) ohne Zusatz von physikalischen Treibmitteln (b3) beziehen.

Als Polyole (Bestandteil b1) kommen im Allgemeinen Verbindungen mit mindestens zwei gegenüber Isocyanat reaktiven Gruppen, das heißt mit mindestens zwei mit Isocyanatgruppen reaktiven Wasserstoffatomen, in Betracht. Beispiele hierfür sind Verbindungen mit OH- Gruppen, SH-Gruppen und/oder NH-Gruppen. Als Polyole (Bestandteil b1) kommen bevorzugt Verbindungen auf Basis von Polyesterolen oder Polyetherolen zum Einsatz. Die Funktionalität der Polyetherole und/oder Polyesterole beträgt im Allgemeinen 1,9 bis 8, bevorzugt 2,4 bis 7, besonders bevorzugt 2,6 bis 6. Die Polyole (b1) weisen eine Hydroxylzahl von im Allgemeinen größer als 20 mg KOH/g, bevorzugt größer als 30 mg KOH/g, besonders bevorzugt größer als 40 mg KOH/g auf. Als Obergrenze der Hydroxylzahl hat sich im Allgemeinen 700 mg KOH/g, bevorzugt 600 mg KOH/g, besonders 500 mg KOH/g ganz besonders 400 KOH/g bewährt. Die oben angegebenen OH-Zahlen beziehen sich auf die Gesamtheit der Polyole (b1), was nicht ausschließt, dass einzelne Bestandteile der Mischung höhere oder niedrigere Werte aufweisen.

Bevorzugt enthält Komponente (b1) Polyetherpolyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls, das 2 bis 8, vorzugsweise 3 bis 8, reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1 ,2-bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen Alkohole in Betracht, wie beispielsweise Glycerin, Trimethylolpropan (TMP), Pentaerythrit, Zuckerverbindungen wie beispielsweise Saccharose, Sorbit, sowie Amine, wie beispielsweise Methylamin, Ethylamin, Isopropylamin, Butylamin, Benzylamin, Anilin, Toluidin, Toluoldiamin, Naphthylamin, Ethylendiamin (EDA), Diethylentriamin, 4,4'- Methylendianilin, 1,3-Propandiamin, 1,6-Hexandiamin, Ethanolamin, Diethanolamin, Triethanolamin und ähnliche.

Weiterhin können als Startermoleküle Kondensationsprodukte aus Formaldehyd, Phenol und Diethanolamin bzw. Ethanolamin, Formaldehyd, Alkylphenolen und Diethanolamin bzw. Ethanolamin, Formaldehyd, Bisphenol A und Diethanolamin bzw. Ethanolamin, Formaldehyd, Anilin und Diethanolamin bzw. Ethanolamin, Formaldehyd, Kresol und Diethanolamin bzw. Ethanolamin, Formaldehyd, Toluidin und Diethanolamin bzw. Ethanolamin sowie Formaldehyd, Toluoldiamin (TDA) und Diethanolamin bzw. Ethanolamin und ähnliche verwendet werden.

Bevorzugt werden als Startermolekül Glycerin, Saccharose, Sorbit und TDA verwendet.

Die Polyolmischung kann ferner optional als Bestandteil (b2) chemische Treibmittel enthalten. Als chemische Treibmittel sind Wasser oder Carbonsäuren, insbesondere Ameisensäure als chemisches Treibmittel bevorzugt. Das chemische Treibmittel wird im Allgemeinen in einer Menge von 0,1 bis 4 Gew.-%, bevorzugt von 0,2 bis 2,0 Gew.-% und besonders bevorzugt von 0,3 bis 1,5 Gew.-%, jeweils bezogen auf das Gewicht der Komponente (b) (jedoch ohne physikalische Treibmittel (b3)), eingesetzt.

Wie vorstehend erwähnt, enthält die Polyolmischung (b) im Allgemeinen ein physikalisches Treibmittel (b3). Darunter versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, beispielsweise Pentan, halogenierte Kohlenwasserstoffe, und andere Verbindungen, wie zum Beispiel perfluorierte Alkane, wie Perfluorhexan, Fluorkohlenwasserstoffe (HFKW), Hydrofluorolefine (HFO) sowie Ether, Ester, Ketone und/oder Acetale. Diese werden üblicherweise in einer Menge von 1 bis 30 Gew.-%, bevorzugt 2 bis 25 Gew.-%, besonders bevorzugt 3 bis 20 Gew.-%, bezogen auf das Gesamtgewicht der Komponenten (b) eingesetzt.

Die vorliegende Erfindung betrifft daher bevorzugt das erfindungsgemäße Verfahren, wobei das Polyurethansystem mit Pentan, bevorzugt cyclo-Pentan, als physikalischem Treibmittel verschäumt wird.

In einer bevorzugten Ausführungsform enthält die Polyolmischung (b) als Bestandteil (b4) Vernetzer. Unter Vernetzern werden Verbindungen verstanden, die ein Molekulargewicht von 60 bis weniger als 400 g/mol aufweisen und mindestens 3 gegenüber Isocyanaten reaktive Wasserstoffatome aufweisen. Ein Beispiel hierfür ist Glycerin.

Die Vernetzer (b4) werden im Allgemeinen in einer Menge von 0,5 bis 10 Gew.-%, bevorzugt von 2 bis 6 Gew.-%, bezogen auf das Gesamtgewicht der Polyolmischung (b) (jedoch ohne physikalische Treibmittel (b3)), eingesetzt.

In einer weiteren bevorzugten Ausführungsform enthält die Polyolmischung (b) als Bestandteil (b5) Kettenverlängerungsmittel, die der Erhöhung der Vernetzungsdichte dienen. Unter Kettenverlängerungsmitteln werden Verbindungen verstanden, die ein Molekulargewicht von 60 bis weniger als 400 g/mol aufweisen und 2 gegenüber Isocyanaten reaktive Wasserstoffatome aufweisen. Beispiele hierfür sind Butandiol, Diethylenglykol, Dipropylenglykol sowie Ethylenglykol.

Die Kettenverlängerungsmittel (b5) werden im Allgemeinen in einer Menge von 2 bis 20 Gew.-%, bevorzugt von 4 bis 15 Gew.-%, bezogen auf das Gesamtgewicht der Polyolmischung (b) (jedoch ohne physikalische Treibmittel (b3)), eingesetzt.

Die Komponenten (b4) und (b5) können in der Polyolmischung einzeln oder in Kombination eingesetzt werden.

Gemäß einer weiteren Ausführungsform betrifft die vorliegende Erfindung daher ein Verfahren wie zuvor beschrieben, wobei die Polyolkomponente (b) mindestens eine Verbindung ausgewählt aus der Gruppe bestehend aus chemischen Treibmitteln, Vernetzern, Kettenverlängerungsmitteln, Zusatzstoffen und/oder physikalischen Treibmitteln enthält.

Durch Umsetzung des erfindungsgemäßen Polyurethansystems sind die erfindungsgemäß als Dämmmaterial vorliegenden Polyurethanschaumstoffe erhältlich. Bei der Umsetzung wird die mindestens eine Isocyanatkomponente (a) und das mindestens eine Polyol (b), bevorzugt die Polyolmischung (b), im Allgemeinen in solchen Mengen zur Umsetzung gebracht, dass die Isocyanat-Kennzahl des Schaums 95 bis 240, bevorzugt 95 bis 200, besonders bevorzugt 100 bis 180, ganz besonders bevorzugt 100 bis 160, insbesondere 105 bis 149, beträgt.

Gemäß einer weiteren Ausführungsform betrifft die vorliegende Erfindung daher ein Verfahren wie zuvor beschrieben, wobei die Umsetzung der Isocyanatkomponente (a) mit der Polyolkomponente (b) bei einer Kennzahl zwischen 95 und 240 durchgeführt wird.

In einer bevorzugten Ausführungsform werden die Komponenten (a) und (b) des Polyurethansystems so gewählt werden, dass der resultierende Schaumstoff eine Druckfestigkeit (bei Rohdichte 60 kg/m³) von größer 0,2 N/mm², bevorzugt größer 0,25 N/mm², besonders bevorzugt grösser 0,3 N/mm², jeweils gemessen nach DIN 53421, aufweist.

Im Allgemeinen beträgt in dem erfindungsgemäßen Verfahren die Gesamteinschussrohdichte weniger als 80 kg/m³, bevorzugt weniger als 75 kg/m³, besonders bevorzugt weniger als 70 kg/m³, ganz besonders bevorzugt weniger als 65 kg/m³, insbesondere weniger als 60 kg/m³. Unter Gesamteinschussrohdichte wird im Allgemeinen die Gesamtmenge an eingefülltem flüssigen Polyurethan-Material bezogen auf das Gesamtvolumen des ausgeschäumten Ringspaltes verstanden.

Das erfindungsgemäße Verfahren kann im Allgemeinen bei jeder dem Fachmann als geeignet erscheinenden Verdichtung erfolgen. Unter Verdichtung versteht man den Quotienten aus der Gesamtfülldichte des Rohrspaltes dividiert durch die freigeschäumte Kernrohdichte bestimmt an einem unverdichteten Schaumkörper.

Bevorzugt betrifft die vorliegende Erfindung das erfindungsgemäße Verfahren, wobei die Umsetzung bei einer Verdichtung von kleiner 4,0, bevorzugt kleiner 3,5, besonders bevorzugt kleiner 3,0 und ganz besonders bevorzugt kleiner 2,5 durchgeführt wird.

Das in Schritt (B) des erfindungsgemäßen Verfahrens eingesetzte Polyurethansystem enthält bevorzugt mindestens einen Katalysator. Erfindungsgemäß können im Allgemeinen alle dem Fachmann als geeignet erscheinende Katalysatoren eingesetzt werden.

Erfindungsgemäß bevorzugt eingesetzte Katalysatoren katalysieren die Treibreaktion, d. h. die Reaktion von Diisocyanat mit Wasser. Diese Reaktion findet überwiegend vor der eigentlichen Polyurethankettenbildung, d. h. der Polymerisationsreaktion, statt und führt daher zu einem schnellen Reaktionsprofil des Polyurethansystems. Des Weiteren können bevorzugt Katalysatoren eingesetzt werden, die die Polyurethan-Gel-Reaktion katalysieren.

Beispiele für erfindungsgemäß einsetzbare Katalysatoren sind ausgewählt aus der Gruppe bestehend aus Benzyldimethylamin (CAS-Nr. 103-83-3), Cyclohexyldimethylamin (CAS-Nr. 98-94-2), 1-Methylimidazol (CAS-Nr. 616-47-7), Hexane-1,6-diamin (CAS-Nr. 124-09-4) oder andere bekannte Katalysatoren, die die PUR-Reaktion beschleunigen, und Mischungen davon.

Die erfindungsgemäß bevorzugten Katalysatoren können dem Polyurethansystem in jeder dem Fachmann bekannten Art zugegeben werden, beispielsweise in Substanz oder als Lösung, beispielsweise als wässrige Lösung.

Bezogen auf die Polyolkomponente (b) (jedoch ohne physikalische Treibmittel (b3)) wird erfindungsgemäß der mindestens eine Katalysator in einer Menge von 0,01 bis 5 Gew.-%, bevorzugt 0,5 bis 5 Gew.-%, besonders bevorzugt 1 bis 5 Gew.-%, ganz besonders bevorzugt 1 ,5 bis 5 Gew.-%, insbesondere 2 bis 5 Gew.-% zugegeben.

Dem erfindungsgemäß eingesetzten Polyurethansystem können gegebenenfalls auch noch Zusatzstoffe (b6) zugesetzt werden. Unter Zusatzstoffe (b6) werden die im Stand der Technik bekannten und üblichen Hilfs- und Zusatzstoffe verstanden, jedoch ohne physikalische Treibmittel. Genannt seien beispielsweise oberflächenaktive Substanzen, Schaumstabilisatoren, Zellregulierer, Füllstoffe, Farbstoffe, Pigmente, Flammschutzmittel, Antistatika, Hydrolyseschutzmittel und/oder fungistatisch und bakteriostatisch wirkende Substanzen. Anzumerken ist, dass die oben angegebenen allgemeinen und bevorzugten Viskositätsbereiche der Komponente (b) sich auf eine Polyolmischung (b) inklusive gegebenenfalls zugesetzter Zusatzstoffe (b6) (jedoch ohne physikalische Treibmittel (b3)) beziehen.

Schritt (C) des erfindungsgemäßen Verfahrens umfasst das Aufschäumen und Aushärtenlassen des Polyurethansystems.

Das Aufschäumen und Aushärten erfolgt erfindungsgemäß im Allgemeinen bei einer Komponententemperatur von 18 bis 40 °C, bevorzugt 18 bis 35 °C, besonders bevorzugt 22 bis 30 °C.

Das Aufschäumen und Aushärten erfolgt erfindungsgemäß im Allgemeinen bei einer Oberflächentemperatur von 15 bis 50 °C, bevorzugt 20 bis 50 °C, besonders bevorzugt 25 bis 45 °C.

Nach Schritt (C) des erfindungsgemäßen Verfahrens wird ein gedämmtes Rohr erhalten mindestens umfassend wenigstens ein Mediumrohr, einen Folienschlauch oder Mantelrohr und eine dämmende Schicht aus Polyurethan-Schaumstoff zwischen wenigstens einem Mediumrohr und Folienschlauch bzw. zwischen Mediumrohr und Mantelrohr.

Die dämmende Schicht weist im Allgemeinen eine Dicke von 1 bis 20 cm, bevorzugt 3 bis 20 cm, besonders bevorzugt 5 bis 20 cm auf. In einer weiteren bevorzugten Ausführungsform weist die dämmende Schicht enthaltend Polyurethan-Schaumstoff eine Wärmeleitfähigkeit von weniger als 27 mW/mK, bevorzugt weniger als 26 mW/mK, besonders bevorzugt weniger als 25 mW/mK, ganz besonders bevorzugt weniger als 24 mW/mK, insbesondere weniger als 23 mW/mK, jeweils gemessen nach EN ISO 8497, auf.

Sofern ein Folienschlauch verwendet wird, umfasst das erfindungsgemäße Verfahren vorzugsweise auch einen Schritt (D).

Schritt (D) des erfindungsgemäßen Verfahrens umfasst das Aufbringen einer Schicht aus wenigstens einem Material auf den Folienschlauch, um ein Mantelrohr zu bilden.

Nach Schritt (C) des erfindungsgemäßen Verfahrens wird gemäß einer Ausführungsform wenigstens ein Mediumrohr erhalten, welches von einer dämmenden Schicht aus wenigstens einem Polyurethan-Schaumstoff umgeben ist, welcher wiederum von dem in Schritt (A) erzeugten Folienschlauch umgeben ist. Zur Ausbildung des Mantelrohres aus wenigstens einem Material wird dieses in Schritt (D) des erfindungsgemäßen Verfahrens aufgebracht. Erfindungsgemäß kann im Allgemeinen jedes geeignete Material als Mantelrohr verwendet werden.

In einer weiteren Ausführungsform des erfindungsgemäßen Verfahrens ist das Material, aus dem in Schritt (D) das Mantelrohr gebildet wird, ein thermoplastischer Kunststoff.

Die vorliegende Erfindung betrifft daher bevorzugt das erfindungsgemäße Verfahren, wobei das Material, aus dem in Schritt (D) das Mantelrohr gebildet wird, ein thermoplastischer Kunststoff, insbesondere Polyethylen, ist. Das Aufbringen von thermoplastischen Kunststoffen kann erfindungsgemäß durch Extrusion erfolgen. Die Extrusion von thermoplastischen Kunststoffen zur Erzeugung einer Schicht, hier das Mantelrohr, ist dem Fachmann an sich bekannt.

Das Aufbringen gemäß Schritt (D) des erfindungsgemäßen Verfahrens wird im Allgemeinen bei einer dem Fachmann für eine Extrusion von thermoplastischen Kunststoffen geeignet erscheinenden Temperatur durchgeführt, beispielsweise oberhalb der Schmelztemperatur des eingesetzten thermoplastischen Kunststoffes. Geeignete Temperaturen sind beispielsweise 180 bis 220 °C, bevorzugt 190 bis 230 °C bzw. 180 bis 230 °C, bevorzugt 190 bis 220 °C.

Das in Schritt (D) des erfindungsgemäßen Verfahrens gebildete Mantelrohr weist im Allgemeinen eine Dicke von 1 bis 30 mm auf. Der Innendurchmesser des Mantelrohrs richtet sich erfindungsgemäß nach dem Durchmesser des Folienschlauches, beispielsweise beträgt er 6 bis 140 cm, bevorzugt 10 bis 120 cm, besonders bevorzugt 115 bis 90 cm.

Das Mantelrohr kann gegebenenfalls aus mehreren Schichten bestehen, die beim Extrusionsvorgang zur Herstellung des Mantelrohres zusammengeführt werden können. Ein Beispiel hierfür ist das Einbringen von mehrlagigen Folien zwischen Polyurethan-Schaumstoff und Mantelrohr, wobei die Folie zur Verbesserung der Sperrwirkung mindestens eine metallische Lage enthält. Geeignete Mantelrohre dieses Typs sind in EP 0 960 723 A2 beschrieben. Diese gegebenenfalls vorliegende zusätzliche Schicht wird bevorzugt bereits in Schritt (A) zusammen mit der Folie eingebracht. Beispielsweise können erfindungsgemäß mehrlagige Folien mit Aluminium als Diffusionssperre eingesetzt werden.

Erfindungsgemäß sind im Allgemeinen alle thermoplastischen Kunststoffe geeignet, die für ein entsprechendes gedämmtes Rohr vorteilhafte Eigenschaften aufweisen. Beispiele für erfindungsgemäß einsetzbare thermoplastische Kunststoffe sind ausgewählt aus der Gruppe bestehend aus Polyethylen, Polypropylen und Mischungen davon, bevorzugt wird Polyethylen eingesetzt.

Das erfindungsgemäße Verfahren kann auch weitere Schritte umfassen. Beispielsweise kann das gebildete gedämmte Rohr behandelt werden, beispielsweise durch Zuschneiden des kontinuierlich hergestellten und damit im Prinzip endlosen gedämmten Rohres in gewünschte Längen, beispielsweise in Längen von 6, 12 oder 16 m.

In einer besonders bevorzugten Ausführungsform handelt es sich bei dem erfindungsgemäß hergestellten gedämmten Rohr um ein gedämmtes Verbundmantelrohr für erdverlegte Fernwärmenetze, welches die Anforderungen von DIN EN 253:2015-12 erfüllt.

Die vorliegende Erfindung betrifft auch ein gedämmtes Rohr, herstellbar durch das erfindungsgemäße Verfahren. Die bezüglich des erfindungsgemäßen Verfahrens genannten Details des hergestellten gedämmten Rohres gelten entsprechend. Das erfindungsgemäß kontinuierlich hergestellte Rohr zeichnet sich durch eine besonders gleichmäßige Dichteverteilung über die gesamte Länge und resultierend hieraus durch geringe Lambda-Werte bei besseren physikalischen Kennwerten aus. Gleichzeitig weist das erfindungsgemäß hergestellte gedämmte Rohr einen großen Außendurchmesser von beispielsweise 125 bis 1400 mm und/oder eine besonders hohe Rohdichte von beispielsweise 50 bis 300 kg/m³, auf. Insbesondere weisen die erfindungsgemäßen Rohre auch eine hohe axiale Scherfestigkeit auf.

Gemäß einem weiteren Aspekt betrifft die vorliegende Erfindung auch eingedämmtes Rohr, erhältlich oder erhalten gemäß einem Verfahren wie zuvor beschrieben.

Gemäß einer weiteren Ausführungsform betrifft die vorliegende Erfindung daher ein gedämmtes Rohr, wie zuvor beschrieben, wobei die axiale Scherfestigkeit zwischen der Deckschicht und der Polyurethanschicht im Bereich von 0,05 bis 0,50 MPa liegt, bestimmt nach DIN EN 253:2015-12.

Es hat sich gezeigt, dass die Aufbringung eines zusätzlichen Haftvermittlers auf das Mediumrohr kurz vor dem Auftragen des Dämmschaums zu einer deutlichen Erhöhung der axialen Scherfestigkeit führt. Es konnte mehr als eine Verdopplung von 0,14 auf 0,31 MPa erreicht werden. Soweit nicht anders angegeben wird im Rahmen der vorliegenden Erfindung die axiale Scherfestigkeit bestimmt nach DIN EN 253:2015-12.

Weitere Ausführungsformen der vorliegenden Erfindung sind den Ansprüchen zu entnehmen.

Es versteht sich, dass die vorstehend genannten und die nachstehend erläuterten Merkmale des erfindungsgemäßen Gegenstandes/Verfahren/Verwendungen nicht nur in der jeweils angegebenen Kombination, sondern auch in anderen Kombinationen verwendbar sind, ohne den Rahmen der Erfindung zu verlassen. So ist z. B. auch die Kombination von einem bevorzugten Merkmal mit einem besonders bevorzugten Merkmal, oder eines nicht weiter charakterisierten Merkmals mit einem besonders bevorzugten Merkmal etc. implizit umfasst auch wenn diese Kombination nicht ausdrücklich erwähnt wird.

### Zitierte Literatur

EP 2 435 243 A1
EP 1 516 720 A1
WO 2015/091451 A1
WO 2011/045139 A1
EP 1 141 613 B1
EP 0 865 893 A1
EP 1 777 051 B1
EP 1 595 904 A2
WO 00/39497 A1
WO 01/18087 A1
EP 2 143 539 A1
EP 1 428 848 B1
EP 0 960 723 A2

## Patentansprüche

1. Verfahren zur Herstellung von gedämmten Rohren, umfassend die Schritte:
(A) Bereitstellen eines Mediumrohrs und eines aus einer Folie kontinuierlich gebildeten Folienschlauches oder eines Mediumrohrs und eines Mantelrohrs, wobei das Mediumrohr innerhalb des Folienschlauchs oder des Mantelrohres angeordnet ist und zwischen Mediumrohr und Folienschlauch oder Mantelrohr ein Spalt ausgebildet wird,
wobei auf der dem Folienschlauch oder Mantelrohr zugewandten Oberfläche des Mediumrohrs ein Haftvermittler aufgetragen ist,
(B) Einfüllen eines Polyurethansystems mindestens umfassend eine Isocyanatkomponente (a) enthaltend mindestens ein Isocyanat, eine Polyolkomponente (b) und mindestens einen Katalysator in den Spalt bevor der Haftvermittler vollständig gehärtet ist, und
(C) Aufschäumen und Aushärtenlassen des Polyurethansystems,
wobei der Haftvermittler ausgewählt ist aus der Gruppe bestehend aus Haftvermittlern auf Basis von Polyurethanen und wobei der Haftvermittler eine Rohdichte, bestimmt ohne feste Füllstoffe, im Bereich von 400 bis 1200 kg/m³ aufweist.

2. Verfahren nach Anspruch 1, wobei der Haftvermittler ein 2-Komponentensystem ist.

3. Verfahren nach einem der Ansprüche 1 bis 2, wobei der Haftvermittler mindestens eine Isocyanatkomponente und eine Polyolkomponente umfasst.

4. Verfahren nach einem der Ansprüche 1 bis 3, wobei der Haftvermittler mittels Sprühen oder Streichen aufgetragen wird.

5. Verfahren nach einem der Ansprüche 1 bis 4, wobei der Haftvermittler einen Anteil der dem Folienschlauch oder Mantelrohr zugewandten Oberfläche des Mediumrohrs im Bereich von 50 bis 100% der Oberfläche bedeckt.

6. Verfahren nach einem der Ansprüche 1 bis 5, wobei die Polyolkomponente (b) mindestens eine Verbindung ausgewählt aus der Gruppe bestehend aus chemischen Treibmitteln, Vernetzern, Kettenverlängerungsmitteln, Zusatzstoffen und physikalischen Treibmitteln enthält.

7. Verfahren nach einem der Ansprüche 1 bis 6, wobei die Umsetzung der Isocyanatkomponente (a) mit der Polyolkomponente (b) bei einer Kennzahl im Bereich von 95 bis 240 durchgeführt wird.

8. Verfahren nach einem der Ansprüche 1 bis 7, wobei das Mantelrohr oder der Folienschlauch aus einem thermoplastischen Kunststoff besteht.

9. Gedämmtes Rohr, erhältlich oder erhalten gemäß einem Verfahren nach einem der Ansprüche 1 bis 8.

10. Gedämmtes Rohr nach Anspruch 9, wobei die axiale Scherfestigkeit zwischen der Deckschicht und der Polyurethanschicht im Bereich von 0,05 bis 0,40 MPa liegt, bestimmt nach DIN EN 253:2015-12.

## Claims

1. A process for producing insulated pipes comprising the steps of:
(A) providing a media pipe and a film hose continuously formed from a film or a media pipe and a jacketing pipe, wherein the media pipe is arranged inside the film hose or the jacketing pipe and a slot is formed between the media pipe and the film hose or jacketing pipe,
wherein an adhesion promoter has been applied to the surface of the media pipe facing the film hose or the jacketing pipe,
(B) introducing a polyurethane system at least comprising an isocyanate component (a) comprising at least one isocyanate, a polyol component (b) and at least one catalyst into the slot before the adhesion promoter is fully cured and
(C) foaming and curing the polyurethane system,
wherein the adhesion promoter is selected from the group consisting of adhesion promoters based on polyurethanes and wherein the adhesion promoter has a bulk density determined without solid fillers in the range from 400 to 1200 kg/m³.

2. The process according to claim 1, wherein the adhesion promoter is a 2-component system.

3. The process according to either of claims 1 to 2, wherein the adhesion promoter comprises at least one isocyanate component and one polyol component.

4. The process according to any of claims 1 to 3, wherein the adhesion promoter is applied by spraying or spread coating.

5. The process according to any of claims 1 to 4, wherein the adhesion promoter covers a proportion of the surface of the media pipe facing the film hose or jacketing pipe in the range from 50% to 100% of the surface.

6. The process according to any of claims 1 to 5, wherein the polyol component (b) comprises at least one compound selected from the group consisting of chemical blowing agents, crosslinkers, chain extenders, additives and physical blowing agents.

7. The process according to any of claims 1 to 6, wherein the reaction of the isocyanate component (a) with the polyol component (b) is performed at an index in the range from 95 to 240.

8. The process according to any of claims 1 to 7, wherein the jacketing pipe or the film hose consists of a thermoplastic.

9. An insulated pipe obtainable or obtained by a process according to any of claims 1 to 8.

10. The insulated pipe according to claim 9, wherein the axial shear strength between the outer layer and the polyurethane layer is in the range from 0.05 to 0.40 MPa determined according to DIN EN 253:2015-12.

## Revendications

1. Procédé pour la fabrication de tubes isolés, comprenant les étapes :
(A) fourniture d'un tube de circulation de milieu et d'un tuyau en film formé en continu à partir d'un film, ou d'un tube de circulation de milieu et d'un tube enveloppe, le tube de circulation de milieu étant disposé à l'intérieur du tuyau en film ou du tube enveloppe et un interstice étant ménagé entre tube de circulation de milieu et tuyau en film ou tube enveloppe,
un agent d'adhérence étant appliqué sur la surface du tube de circulation de milieu tournée vers le tuyau en film ou le tube enveloppe,
(B) introduction d'un système polyuréthane comprenant au moins un composant isocyanate (a) contenant au moins un isocyanate, un composant polyol (b) et au moins un catalyseur dans l'interstice avant que l'agent d'adhérence ne soit totalement durci, et
(C) moussage et abandon au durcissement du système polyuréthane,
dans lequel l'agent d'adhérence est choisi dans le groupe constitué par les agents d'adhérence à base de polyuréthanes et dans lequel l'agent d'adhérence présente une densité apparente, déterminée sans charges solides, dans la plage de 400 à 1 200 kg/m³.

2. Procédé selon la revendication 1, dans lequel l'agent d'adhérence est un système bicomposant.

3. Procédé selon l'une quelconque des revendications 1 et 2, dans lequel l'agent d'adhérence comprend au moins un composant isocyanate et un composant polyol.

4. Procédé selon l'une quelconque des revendications 1 à 3, dans lequel l'agent d'adhérence est appliqué par pulvérisation ou enduction à la brosse.

5. Procédé selon l'une quelconque des revendications 1 à 4, dans lequel l'agent d'adhérence recouvre une proportion de la surface du tube de circulation de milieu tournée vers le tuyau en film ou le tube enveloppe dans la plage de 50 à 100 % de la surface.

6. Procédé selon l'une quelconque des revendications 1 à 5, dans lequel le composant polyol (b) contient au moins un composé choisi dans le groupe constitué par des additifs, extendeurs de chaîne, agents de réticulation, agents porogènes chimiques et agents porogènes physiques.

7. Procédé selon l'une quelconque des revendications 1 à 6, dans lequel la réaction du composant isocyanate (a) avec le composant polyol (b) est effectuée à un indice caractéristique dans la plage de 95 à 240.

8. Procédé selon l'une quelconque des revendications 1 à 7, dans lequel le tube enveloppe ou le tuyau en film est constitué d'une matière synthétique thermoplastique.

9. Tube isolé, obtenu ou pouvant être obtenu conformément à un procédé selon l'une quelconque des revendications 1 à 8.

10. Tube isolé selon la revendication 9, dans lequel la résistance au cisaillement axial entre la couche de recouvrement et la couche de polyuréthane se situe dans la plage de 0,05 à 0,40 MPa, déterminée selon DIN EN 253:2015-12.
